# EUROPEAN PATENT APPLICATION

(11) **EP 2 717 376 A1**
(43) Date of publication of application: **09.04.2014**
(21) Application number: 12789042.4
(22) Date of filing: 18.05.2012
(51) Int. Cl.: H01M 10/058, H01M 10/052, H01M 10/0569, H01M 10/52

(54) **LITHIUM ION SECONDARY BATTERY**

(30) Priority: 25.05.2011 JP 2011116494
(71) Applicant: Shin-Kobe Electric Machinery Co., Ltd., Tokyo 104-0044 (JP)
(72) Inventor: SATO Akira, Tokyo 104-0044 (JP)
(74) Representative: MERH-IP Matias Erny Reichl Hoffmann
(86) International application number: PCT/JP2012/062861
(87) International publication number: WO 2012/161137

(57) **Abstract**

The leakage of smoke produced from the inside of a battery is to be prevented, and more secure use is to be enabled. A lithium ion battery houses an electrode group in a battery can together with an electrolyte solution. The electrode group includes a positive electrode and a negative electrode prepared through a separator. The battery can is a hermetically sealed metal container including a cap. The battery can includes a portion in the battery can. The portion at least one of adsorbs and absorbs smoke or a gas component produced from the inside of the battery can.

## Description

### TECHNICAL FIELD

The present invention relates a lithium ion battery, and more particularly to a lithium ion battery having a function to suppress a smoke producing phenomenon.

### BACKGROUND ART

In aiming for the realization of a low carbon society, it is desired to put hybrid automobiles and electric vehicles into the practical use and to use the automobiles and vehicles widely in order to reduce an amount of carbon dioxide produced. Moreover, also in order to realize a low carbon society, it is increasingly demanded in future to efficiently use electric power energy, in which in electric power networks to transmit electric power from power plants to individual households and industrial districts, electric power generated from wind power generation, solar photovoltaic power generation, or the like is used in the electric power networks.

Conventional thermal power generation, water power generation, and nuclear electric power generation can stably supply electric power. On the contrary, since wind power generation and solar photovoltaic power generation use natural energy, an amount of power generated is greatly varied in the unit of time in a day. Moreover, demands are varied in a day also in the electric power demand in the electric power networks, so that in order to transmit electric power as matched with the electric power demand changed over time, it is predicted that rechargeable batteries of a large capacity will be provided on wind power generation systems and solar photovoltaic power generation systems and provided in factories and buildings whose electric power demand is large.

As described above, for rechargeable batteries provided on wind power generation systems and solar photovoltaic power generation systems using natural energy and rechargeable batteries installed in buildings, it is known that a lithium ion battery of high capacity and high energy density (in the following, referred to as a lithium battery) has a desirable performance.

For a module (a battery pack) combining a plurality of electric cells, there is Patent Document 1, for example, describing a module having schemes when a gas is emitted from a battery caused by battery malfunctions in a power supply module for electric vehicles.

### RELATED ART DOCUMENT

### PATENT DOCUMENT

Patent Document 1: Japanese Patent Application Laid-Open Publication No. 2004-14421

### SUMMARY OF THE INVENTION

### PROBLEMS THAT THE INVENTION IS TO SOLVE

In future, rechargeable batteries will be necessary in the electric power networks. It is predicted that places to install rechargeable batteries will be spaces where people live such as houses of individual ordinary households, commercial facilities, and buildings. However, when a lithium battery is put in a very high temperature state because of a disaster such as a fire or earthquake or when a lithium battery is destroyed by an impact such as a falling object, for example, it is predicted that various reactions will occur caused by chemical physical properties between battery materials.

Presently, schemes are provided so as to prevent catching a fire and combustion from the viewpoints of battery materials, battery control, and power supply systems. However, it is difficult to also suppress a smoke producing phenomenon that is an emission of a reaction product in a battery when a disaster or the like takes place. For detailed mechanisms, when a battery is heated by flames in catching a fire, an electrolyte solution is vaporized to increase the pressure in the battery, and a reaction product is emitted. Moreover, when a lithium battery is destroyed by a falling object, for example, such a phenomenon occurs that metal foils called current collectors, on which positive and negative active materials of positive electrode and negative electrode materials are applied, are contacted with each other and internal short-circuiting causes a large electric current to flow instantaneously, so that heat is generated. Because of a temperature rise due to this heat generation, the electrolyte solution is vaporized, or a reaction with other battery materials occurs, causing a smoke producing phenomenon.

In disasters such as catching a fire, an earthquake, or the like, it is very important to secure evacuation routes when many people are evacuated in houses, commercial facilities, and buildings. Thus, it is likely that producing smoke due to rechargeable batteries as described above causes major problems on escape guiding. An object of the present invention is to prevent the leakage of smoke produced from the inside of a battery as described above, and to enable more secure use.

### MEANS FOR SOLVING THE PROBLEMS

In order to solve the problems, the following configuration is considered to be effective.

A lithium ion battery includes a battery can that houses an electrode group together with an electrolyte solution therein. The electrode group has a positive electrode and a negative electrode prepared through a separator. The battery can is a hermetically sealed metal container including a cap. The battery can includes a portion therein. The portion is configured to at least one of adsorb and absorb smoke or a gas component produced from the inside of the battery can.

At this time, in the lithium ion battery, the portion configured to at least one of adsorb and absorb smoke or a gas component produced from the inside of the battery can is directly joined to a cleavage valve provided on the cap.

Then, in the lithium ion battery, the battery can is in a cylindrical shape. A pole electrically joining the electrode group to a terminal is included. The portion configured to at least one of adsorb and absorb smoke or a gas component produced from the inside of the battery can includes a space through which the pole is penetrated near the center in a direction of a nearly circular cross section of the cylindrical battery can.

At this time, in the lithium ion battery, in the portion configured to at least one of adsorb and absorb smoke or a gas component produced from the inside of the battery can, an inlet and an outlet of a passage for the smoke or the gas component are disposed at locations at an angle ranging from an angle of 90° to an angle of 180° with respect to the center of the battery can.

Moreover, in the lithium ion battery, the portion configured to at least one of adsorb and absorb smoke or a gas component produced from the inside of the battery can is a fluorine high molecule compound having a heat-resisting property in a temperature range of a temperature of 250°C or less.

At this time, in the lithium ion battery, the fluorine high molecule compound is nonwoven fabric using polytetrafluoro-ethylene or polyhexafluoropropylene.

Furthermore, in the lithium ion battery, the portion configured to at least one of adsorb and absorb smoke or a gas component produced from the inside of the battery can is an inorganic compound having a heat-resisting property in a temperature range of a temperature of 250°C or less.

Then, in the lithium ion battery, the inorganic compound is any one of porous alumina oxidize, silica gel, and zeolite.

Alternatively, in the lithium ion battery, the positive electrode uses lithium transition metal complex oxide for a positive active material, the negative electrode uses a carbon material, silicon, and tin for a negative active material, and for the electrolyte solution, lithium salt is dissolved in a carbonate organic solvent.

### EFFECT OF THE INVENTION

With an increase in the size of the battery, a power supply using a module formed of electric cells of a lithium battery generates heat caused by the internal resistance of the battery itself in association with charging and discharging when the power supply is used, so that such a structure is necessary in consideration of cooling the electric cells. Thus, such a structure is formed to circulate a gas for cooling, which causes a difficulty to absorb and adsorb smoke producing components from the lithium battery in emergency. Therefore, in the present invention, a portion to absorb and adsorb smoke producing components is provided on the electric cells of the lithium battery increased in size, so that it is possible to eliminate dependence on the shape and cooling structure of the power supply because of modules.

The detail of the battery structure and the operation when producing smoke will be described later including an embodiment and examples.

### BRIEF DESCRIPTION OF THE DRAWINGS

Fig. 1 is a cross sectional view of an exemplary cylindrical battery can having an adsorbing portion for smoke producing materials of a lithium battery according to an embodiment to which the present invention is applicable;
Fig. 2 is a diagram of an exemplary adsorbing portion for smoke producing materials of a cylindrical battery can of a lithium battery according to an embodiment to which the present invention is applicable;
Fig. 3 is a diagram of an exemplary adsorbing portion for smoke producing materials of a cylindrical battery can of a lithium battery according to an embodiment to which the present invention is applicable (seen from directly above a cylinder);
Fig. 4 is a cross sectional view of a rectangular battery can having an adsorbing portion for smoke producing materials of a lithium battery according to an embodiment to which the present invention is applicable;
Fig. 5 is a cross sectional view of the rectangular battery can having an adsorbing portion for smoke producing materials of the lithium battery according to an embodiment to which the present invention is applicable along a line A-B in Fig. 4; and
Fig. 6 is a block diagram of an adsorbing portion for smoke producing materials of a rectangular battery can of a lithium battery according to an embodiment to which the present invention is applicable.

### MODE FOR CARRYING OUT THE INVENTION

A power supply of a large capacity to store electric power is necessary to construct a power supply system for use in electric power networks. For the capacity in the construction of the system, a capacity of at least a few tens KWh is necessary, and a capacity of a few MWh is necessary for a large scale system for factories, for example. In the construction of the system, a lithium battery forming the power supply is configured in which a plurality of electric cells are put together to form the power supply as a module, not forming the power supply using only a single battery (an electric cell).

In order to form a power supply of a large capacity, a few hundreds of thousands of batteries are necessary when the power supply is configured of the capacity of a 18650 lithium battery for use in a notebook computer. However, it is considerably difficult to charge and discharge such a number of lithium batteries and to monitor the state of the lithium batteries, so that the configuration is not suitable for practical use. Therefore, a few tens of electric cells having a capacity of a few tens Ah that is 100 to 1,000 times the capacity of a lithium battery for use in a notebook computer and a mobile telephone are put together to form a module, so that it is possible to configure a power supply having a capacity ranging from a few KWh to a few tens KWh. A few tens of such modules are combined, so that a power supply having a capacity of a few MWh can be configured.

Moreover, with the use of such electric cells, when the module is also used for a backup power supply and an emergency power supply, the module can be used with no restrictions on places to install the module because the leakage of smoke is prevented.

For smoke producing components from a lithium battery in emergency, the following is named: components that a carbonate solvent used for an electrolyte solution is vaporized; and hydrogen, methane, ethane, ethylene, and carbon dioxide produced by reactions between an electrolyte solution and positive and negative active materials. In addition to this, the following can be considered: a resolvent of lithium salt, PF₃O when Li salt is LiPF₆, lithium carbonate (Li₂CO₃) produced by a reaction between lithium salt and a carbonate solvent, and a reaction product (LiOCOOR (R = -CH₃, -CH₂CH₃)) of a carbonate solvent with Li. For a vaporizing component to absorb and adsorb these smoke producing components, a carbon material such as activated carbon is named for a preferable material. For a particulate matter, a fiber material that is a heat-resisting fluorine high molecule compound, fibrous glass, and so on are named for preferable materials.

In the following, an embodiment of the present invention will be described with reference to the drawings.

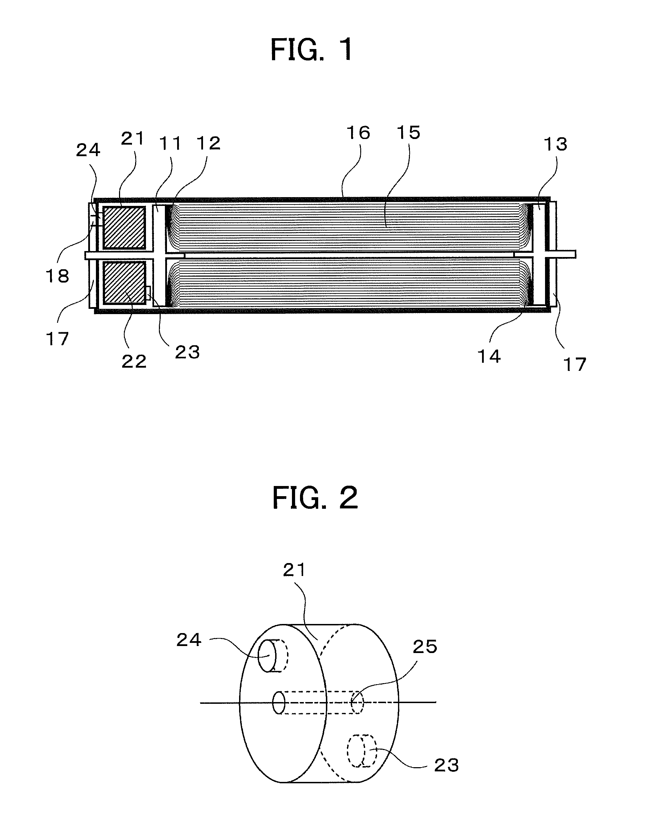

Fig. 1 is a schematic diagram of the cross section of a lithium battery housed in a battery can.

In a battery can 16, an electrode group 15 is housed that a positive electrode, a separator, a negative electrode, and a separator are disposed in such a way that they are alternately stacked on each other and are wound about the center axis, and gaps between them are filled with an electrolyte solution.

In a cylindrical battery, positive and negative current collectors are joined to poles, and the poles are joined to a positive electrode terminal and a negative electrode terminal, respectively. A gas discharge valve that emits a gas produced in an improper use is provided on the positive electrode side. Moreover, an adsorbing portion that adsorbs smoke producing materials produced in an improper use is disposed between the wound group and a positive electrode terminal, and a positive electrode pole penetrates through the center of the adsorbing portion.

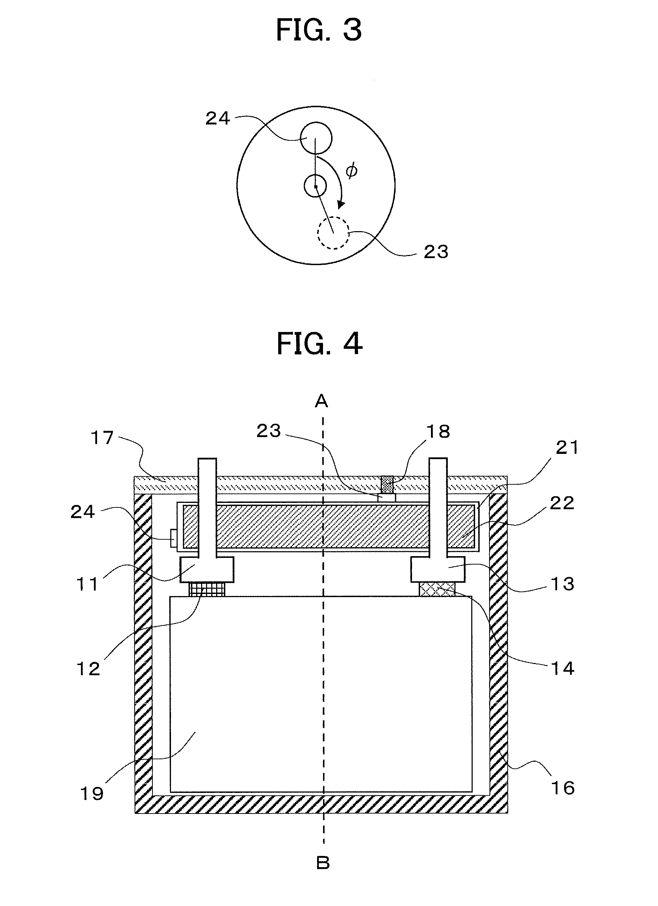

Furthermore, in a rectangular battery as shown in Fig. 4, positive and negative current collectors are joined to a positive electrode terminal and a negative electrode terminal, respectively, and are insulated from a battery cap and fixed to the battery cap. A gas discharge valve that emits a gas produced in an improper use is provided on the battery cap. In addition, an adsorbing portion that adsorbs smoke producing materials produced in an improper use is disposed between the battery cap and the wound group or between the battery cap and one that a positive electrode, a separator, a negative electrode, and a separator are alternately stacked on each other.

### EXAMPLES

In the following, examples of the present invention will be described.

In the examples described below, an example will be described in which the present invention is applied to an industrial accumulator battery to stabilize electric power output mainly in wind power generation and in power generation using solar cells.

The forms of the lithium battery are mainly categorized into two types: a battery that a positive electrode, a negative electrode, a separator, and an electrolyte solution are housed in a metal container in housing them; and a laminate battery having an aluminum laminate that a film is applied on aluminum foil for a sheathing material. For the laminate battery, it is considered that restrictions are imposed on upsizing the lithium battery because of the strength of aluminum laminate. The present invention is limited to a lithium battery housed in a battery can of a metal container.

In an improper use of the lithium battery, when an electric circuit controlled by a lithium battery is failed or broken, it is likely to overcharge the lithium battery because the charging state is maintained. Moreover, internal short-circuiting possibly occurs by piercing a lithium battery with a conductive material such as metal or by contacting current collectors with each other due to external force. When these events occur, materials derived from the battery members are emitted out of the battery as smoke producing materials through the process that the heat of reaction between battery members or heat generation due to short circuiting increases the temperature in the battery. In the emission, a cleavage valve provided on the battery cap is cleaved by a pressure increase in association with a temperature rise in the battery, so that materials in the battery can be moved to the outside air. Thus, the upper limit is imposed on the pressure in the battery.

For the types of gases produced, methane, ethane, ethylene, and hydrogen gas, for example, are named for decomposition products of the carbonate solvent of a vaporized electrolyte solution and decomposition products of the electrolyte solution on the positive electrode and the negative electrode, and a fluorophosphate compound (PF₃O), for example, is named for a decomposition product of lithium salt. For smoke producing materials among the products, the mist material of a vaporized organic solvent and the particulate matter of PF₃O can be considered.

For a material for use in the removal of smoke producing materials filled in the adsorbing portion according to the present invention, since a smoke producing phenomenon occurs at a temperature of 120°C or more when overcharging or internally short-circuiting the lithium battery, it is demanded to provide heat-resisting properties at this temperature or more. Thus, for the material to remove smoke producing materials, a fluorine high molecule compound that is a fibrous filter is desirable, and nonwoven fabric using polytetrafluoro-ethylene or polyhexafluoropropylene is particularly desirable. Since a gas including smoke producing materials is removed in passing the gas through a filter, the removal effect is improved when the filter disposed on the smoke adsorbing portion is nonwoven fabric.

On the other hand, it is also possible to use an inorganic compound for the material to remove smoke producing materials. Since compounds having an affinity for organic materials such as a carbonate solvent that is a principal component of the electrolyte solution tend to adsorb smoke producing materials, porous alumina (Al₂O₃), silica gel (SiO₂), and zeolite can be used. For the shapes, any shapes may be possible including powder, pellets, beads, and plates. However, beads are desirable among the shapes described above, in consideration of the ease of removal due to the improvement of the contact area with the filter when removing a gas including smoke producing materials and the prevention of the leakage of inorganic compounds themselves to remove a gas in passing the gas through the filter. Such a configuration is provided in which the adsorbing materials are filled in the absorbing portion. A glass filter of high heat-resisting properties is provided on an inlet portion into which smoke producing materials flow and on an outlet portion from which smoke producing materials are discharged so as not to leak the adsorbing materials.

As shown in Fig. 2, the adsorbing portion for smoke producing materials is often in a cylindrical doughnut-shaped structure, in which the positive electrode pole is enabled to penetrate through the center part. The adsorbing portion includes the material to remove smoke producing materials descried above in the adsorbing portion. The border between the wound group of the battery and the battery cap is partitioned by a cap provided with a cleavage valve that is cleaved at a predetermined pressure. In increasing a pressure in the battery can due to overcharging and internal short-circuiting in an improper use, when the internal pressure is increased more than a pressure at which the cleavage valve can withstand, smoke producing materials flow into the adsorbing portion, and a gas from which smoke producing materials are removed is discharged from the cleavage valve of the battery cap through the process of adsorption.

In the cylindrical battery, the adsorbing portion for smoke producing materials is in a cylindrical shape in which the center is hollow. Moreover, as shown in Fig. 3, for the passage of the adsorbing portion for smoke producing materials, when an angle defined by lines connecting the inlet and the outlet of this passage to the center of the cylinder is less than an angle of 90°, smoke producing materials introduced from the inlet to the adsorbing portion do not pass through the entire adsorbing material, and are discharged from the outlet, and the adsorption effect is degraded. Thus, desirably, an angle defined by the center of the battery can, the inlet, and the outlet is at an angle of 90° or more and an angle of 180° or less, and more desirably, at an angle ranging from an angle of 120° to an angle of 180°, particularly.

At this time, since the original purpose is to improve the effect of adsorbing smoke producing material, the inlet and the outlet of the adsorbing portion shown in the example are provided one each. However, it is also effective that two inlets and one outlet are provided in order to further improve the adsorption effect.

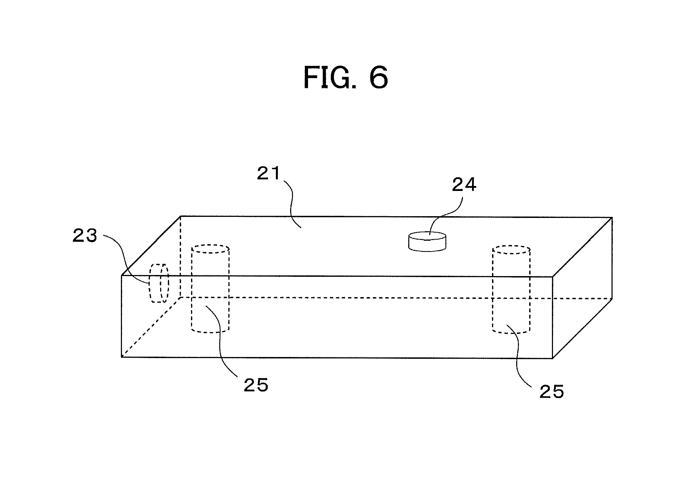

Moreover, as shown in Fig. 6, in the rectangular battery, the shape is a rectangular parallelepiped preferably in a structure in which an inlet into which smoke producing materials flow is provided on the lower part, an outlet from which smoke producing materials are discharged is provided on the upper part or the side surface, and the outlet is joined to the cleavage valve of a battery cap. For a passage through which smoke producing materials flow, desirably, the inlet is not overlapped with the outlet when seen from the top face.

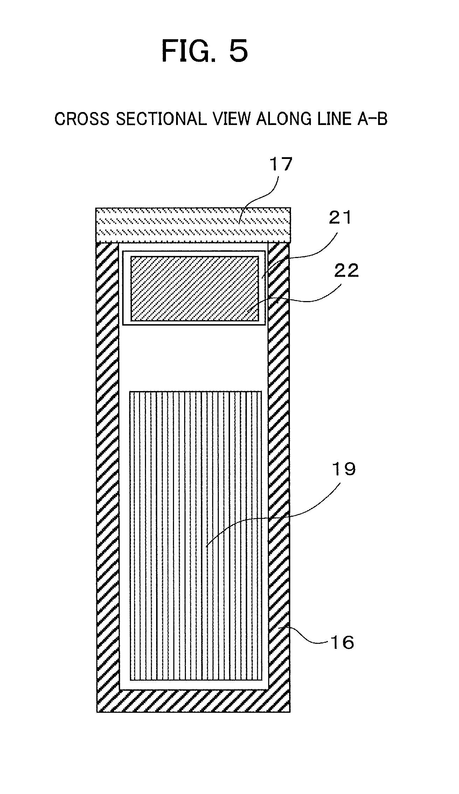

As schematically shown in Figs. 1 and 5, desirably, the adsorbing portion has a thickness of 15 to 40% of the length of the battery can of the cylindrical battery, and 10% to 35% of the volume of the battery can at the volume ratio of the rectangular battery.

Also in the cylindrical battery and in the rectangular battery, such a structure is provided in which a battery cap 17 is mounted on a battery can 16. At this time, since the electrode group 15 side (supposing that it is the lower side) in the battery can 16 is the emission source of smoke producing materials, the inlet of the adsorbing portion is provided on the lower side, and the battery cap 17 side (supposing that it is the upper side) is the emission direction of smoke producing materials. This structure is a general structure, so that such a structure can be considered that the outlet of the adsorbing portion is provide on the upper side. However, when the emission port of smoke producing materials is provided on a part of the electrode can 16, the outlet of smoke producing materials may be provided on the lateral side, not on upper side.

The positive electrode for use in the lithium battery according to the present invention is formed in which a positive electrode mixture formed of a positive active material, a conductive agent, and a binder is applied to the both sides of aluminum foil, and then dried and pressed.

For the positive active material, materials expressed by a chemical formula LiMO₂ (M is at least one kind of transition metal), manganese spinel, or the like can be used. A part of Mn, Ni, and Co, for example, in a positive active material such as lithium manganese oxide, lithium nickelate, and lithium cobalt oxide can be substituted with one kind or two kinds or more of transition metals for use. Moreover, a part of a transition metal can be substituted with a metal element such as Mg and Al for use. For the conductive agent, a publicly known conductive agent such as a carbon conductive agent including graphite, acetylene black, carbon black, and carbon fiber, for example, may be used, and the conductive agent is not limited particularly. For the binder, a publicly known binder such as polyvinylidene fluoride and fluorine rubber may be used, for example, and the binder is not limited particularly. A preferable binder in the present invention is polyvinylidene fluoride, for example. Furthermore, for the solvent, various publicly known solvents can be appropriately selected for use. Preferably, an organic solvent such as N-methyl-2-pyrrolidone is used, for example. The mixing ratio between the positive active material, the conductive agent, and the binder in the positive electrode mixture is not limited particularly. However, preferably, the mixing ratio is 1:0.05 to 0.20:0.02 to 0.10 at a weight ratio where the positive active material is one, for example.

The negative electrode for use in the lithium battery according to the present invention is formed in which a negative electrode mixture formed of a negative active material and a binder is applied to the both sides of copper foil, and then dried and pressed. A preferable material in the present invention is a carbon material such as graphite and amorphous carbon. For the binder, materials similar to the binder of the positive electrode are used, for example, and the binder is not limited particularly. A preferable binder in the present invention is polyvinylidene fluoride, for example. A preferable solvent is an organic solvent such as N-methyl-2-pyrrolidone, for example. The mixing ratio between the negative active material and the binder in the negative electrode mixture is not limited particularly. However, the mixing ratio is 1:0.05 to 0.20 at the weight ratio where the negative active material is one, for example.

For a nonaqueous electrolyte solution for use in the lithium battery according to the present invention, a publicly known nonaqueous electrolyte solution may be used, and the nonaqueous electrolyte solution is not limited particularly. For a nonaqueous solvent, there are propylene carbonate, ethylene carbonate, butylene carbonate, vinylene carbonate, dimethylcarbonate, diethyl carbonate, methyl ethyl carbonate, tetrahydrofuran, 1,2-diethoxyethane, ionic liquid, and so on, for example. A nonaqueous electrolyte solution can be adjusted by dissolving one kind or more of lithium salt selected from LiPF₆, LiBF₄, LiClO₄, LiB(C₆H₅)₄, LiCH₃SO₃, LiCF₃SO₃, LiN(SO₂CF₃)₂, LiN(SO₂CF2CF₃)₂, and the like in one kind or more of the solvents, for example.

Moreover, also for other components such as structural materials including a separator and a battery case, various publicly known conventional materials can be used, and the components are not limited particularly. For the separator, a polyolefin porous film is generally used, and for the material, a composite film of polyethylene and polypropylene is used. Since the separator is demanded to have heat-resisting properties, a ceramic integrated separator on which ceramics such as alumina is applied on the surface and a ceramic integrated separator using them as a part of components of a porous film are being developed.

Triethyl phosphate is taken as an example of a flame-retarded agent. However, a general flame-retarded agent may be used. A flame-retarded agent for use in the present invention is not limited particularly. For example, a compound including a phosphate, a phosphazene, and an alkyl fluoride group, a flame-retarded agent such as ionic liquid, or one having a mixture of two kinds or more of them may be used, and the mixing ratio is not limited as well.

### First Example

LiMn₂O₄ was used for a positive active material. A positive active material, graphite for a conductive agent, and polyvinylidene fluoride for a binder were kneaded at a weight ratio of 85:10:5 for 30 minutes using a kneader, and a positive electrode mixture was obtained. The positive electrode mixture was applied to the both sides of aluminum foil, which was a current collector having a thickness of 30 µm. On the other hand, a graphite material was used for the negative active material, polyvinylidene fluoride was used for a binder, and the negative active material and the binder were kneaded at a weight ratio of 90:10 between the negative active material and the binder. The obtained negative electrode mixture was applied to the both sides of copper foil having a thickness of 20 µm. Both of the prepared positive and negative electrodes were rolled and shaped with a pressing machine, and then vacuum dried at a temperature of 150°C for five hours. A porous high molecule resin film of polyethylene (PE) (having a thickness of 20 µm) was used for a separator, the positive electrode and the negative electrode were laid on each other in such a way that the positive electrode and the negative electrode were insulated from each other through the separator, and then they were wound. An obtained electrode group 15 was inserted into a cylindrical battery can 16. Moreover, an obtained negative current collector 14 was put together on a negative electrode pole 13 and subjected to ultrasonic wave welding, and a battery cap 17 was penetrated through the negative electrode pole 13 and fixed using a negative electrode hexagon nut 10 to be a negative electrode terminal. On the other hand, an aluminum positive current collector 12 was subjected to ultrasonic wave welding to a positive electrode pole 11, and then the aluminum positive electrode pole 11 was penetrated through a battery cap 17, and fixed using a positive electrode hexagon nut 9 to be a positive electrode terminal.

At this time, an adsorbing portion 21 to adsorb smoke producing materials is provided so as to fill a gap between the positive electrode pole 11 and the battery can 16. For the adsorbing material of the adsorbing portion, a filter formed of a fluorine high molecule compound was used. The battery cap 17 of the positive electrode and the battery cap 17 of the negative electrode were sealed by laser welding to the battery can 16 for a hermetically sealed state. An electrolyte solution (LiPF₆/EC (ethylene carbonate) :MEC (methylethyl carbonate) = 1:2) was poured from the liquid intake (not shown) of the battery cap 17 on the negative electrode side, and then a cylindrical lithium battery was obtained.

### Second Example

A battery was prepared as similar to the first example, and a cylindrical lithium battery was obtained using silica gel for the adsorbing material of an adsorbing portion 21.

### Third Example

A positive electrode and a negative electrode were prepared as similar to the first example, and in winding the positive electrode and the negative electrode through a separator, the positive electrode and the negative electrode were inserted into a rectangular battery can 26 in such a way that the cross section of an electrode group 15 called flat winding was in an ellipse. A positive current collector and a negative current collector at the electrodes were joined to a positive electrode pole 11 and a negative electrode pole 13, respectively, and the poles were inserted into the pole cavity of an adsorbing portion 21, and then insulated and fixed to a battery cap 17.

The battery cap 17 and a battery can 16 are sealed by laser welding for a hermetically sealed state. An electrolyte solution (LiPF₆/EC (ethylene carbonate) :MEC (methylethyl carbonate) = 1:2) was poured from a liquid intake 27 of the battery cap on the top face, and then a rectangular lithium battery was obtained.

### Fourth Example

A rectangular battery was prepared as similar to the third example, and a rectangular lithium battery was obtained using silica gel for the adsorbing material of an adsorbing portion 21.

### Fifth Example

A positive electrode and a negative electrode were prepared as similar to the first example, an electrode group 15 was prepared by stacking the positive electrode and the negative electrode on each other through a separator, and terminals lead out of the electrodes were joined to a battery cap 17, and inserted into a rectangular battery can 26. An adsorbing portion 21 to adsorb smoke producing materials is disposed between the electrodes stacked on the battery cap 17. The outlet port of the adsorbing portion 21 is disposed so as to overlap with a cleavage valve 18 of the battery cap 17. For the adsorbing material of the adsorbing portion 21, a filter formed of a fluorine high molecule compound was used.

The battery cap 17 and the battery can 16 were sealed by laser welding for a hermetically sealed state. An electrolyte solution (LiPF₆/EC (ethylene carbonate) :MEC (methylethyl carbonate) = 1:2) was poured from a liquid intake 27 of the battery cap on the top face, and a stacked rectangular lithium battery was obtained.

### Sixth Example

A rectangular battery was prepared as similar to the fifth example, and a stacked rectangular lithium battery was obtained using silica gel for the adsorbing material of an adsorbing portion 21.

### First Comparative Example

A cylindrical lithium battery as similar to the first example was obtained except that an adsorbing portion 21 to adsorb smoke producing materials filled in a gap between a positive electrode pole 11 and a battery can 16 was removed.

### Second Comparative Example

A rectangular lithium battery as similar to the third example was obtained except that an adsorbing portion 21 to adsorb smoke producing materials as filled in a gap between a positive electrode pole 11 and a rectangular battery can 26 was removed.

### Third Comparative Example

A stacked rectangular lithium battery as similar to the fifth example was obtained except that an adsorbing portion 21 to adsorb smoke producing materials as filled in a gap between a positive electrode pole 11 and a rectangular battery can 26 was removed.

The batteries of the examples and the comparative examples were charged and discharged at a charge termination voltage of 4.2 V, a discharge termination voltage of 3. 0 V, and a charging and discharging rate of 1 C (one hour rate), and the battery capacities were confirmed. Overcharge tests were conducted under the test conditions that an electrical quantity 2.5 times the battery capacity was charged to a battery in a discharge state. Moreover, nail penetration tests were conducted under the test conditions that a nail having a diameter of 5 mm was penetrated through a battery for causing internal short-circuiting. The results that the behaviors of the batteries were checked at the tests are shown in Table 1.

[Table 1]

**Table 1**

| | Smoke producing material adsorbing portion | Overcharge test | Nail penetration test |
|---|---|---|---|
| First example | Provided | No smoke observed | No smoke observed |
| Second example | Provided | No smoke observed | No smoke observed |
| Third example | Provided | No smoke observed | No smoke observed |
| Fourth example | Provided | No smoke observed | No smoke observed |
| Fifth example | Provided | No smoke observed | No smoke observed |
| Sixth example | Provided | No smoke observed | No smoke observed |
| First comparative example | Not provided | Smoke observed | Smoke observed |
| Second comparative example | Not provided | Smoke observed | Smoke observed |
| Third comparative example | Not provided | Smoke observed | Smoke observed |

### DESCRIPTION OF REFERENCE NUMERALS AND SIGNS

- 9: Positive electrode hexagon nut
- 10: Negative electrode hexagon nut
- 11: Positive electrode pole
- 12: Positive current collector
- 13: Negative electrode pole
- 14: Negative current collector
- 15: Electrode group
- 16: Battery can
- 17: Battery cap
- 18: Cleavage valve
- 19: Electrode stacked group
- 21: Adsorbing portion
- 22: Adsorbing material
- 23: Adsorbing portion inlet
- 24: Adsorbing portion outlet
- 25: Pole cavity
- 27: Liquid intake

## Claims

1. A lithium ion battery comprising:
a battery can that houses an electrode group together with an electrolyte solution therein, the electrode group having a positive electrode and a negative electrode prepared through a separator, wherein:
the battery can is a hermetically sealed metal container including a cap; and
an inside of the battery can includes a portion therein, the portion being configured to at least one of adsorb and absorb smoke or a gas component produced from the inside of the battery can.

2. The lithium ion battery according to claim 1,
wherein the portion configured to at least one of adsorb and absorb smoke or a gas component produced from the inside of the battery can is directly joined to a cleavage valve provided on the cap.

3. The lithium ion battery according to claim 2, wherein:
the battery can is in a cylindrical shape;
a pole electrically joining the electrode group to a terminal is included; and
the portion configured to at least one of adsorb and absorb smoke or a gas component produced from the inside of the battery can includes a space through which the pole is penetrated near a center in a direction of a nearly circular cross section of the cylindrical battery can.

4. The lithium ion battery according to claim 3,
wherein in the portion configured to at least one of adsorb and absorb smoke or a gas component produced from the inside of the battery can, an inlet and an outlet of a passage for the smoke or the gas component are disposed at locations at an angle ranging from an angle of 90° to an angle of 180° with respect to the center of the battery can.

5. The lithium ion battery according to any one of claims 1 to 3,
wherein the portion configured to at least one of adsorb and absorb smoke or a gas component produced from the inside of the battery can is a fluorine high molecule compound having a heat-resisting property in a temperature range of a temperature of 250°C or less.

6. The lithium ion battery according to claim 5,
wherein the fluorine high molecule compound is nonwoven fabric using polytetrafluoro-ethylene or polyhexafluoropropylene.

7. The lithium ion battery according to any one of claims 1 to 3,
wherein the portion configured to at least one of adsorb and absorb smoke or a gas component produced from the inside of the battery can is an inorganic compound having a heat-resisting property in a temperature range of a temperature of 250°C or less.

8. The lithium ion battery according to claim 7,
wherein the inorganic compound is any one of porous alumina oxidize, silica gel, and zeolite.

9. The lithium ion battery according to any one of claims 1 to 8, wherein:
the positive electrode uses lithium transition metal complex oxide for a positive active material;
the negative electrode uses a carbon material, silicon, and tin for a negative active material; and
for the electrolyte solution, lithium salt is dissolved in a carbonate organic solvent.
